# EUROPÄISCHE PATENTSCHRIFT

(11) **EP 0 749 643 B1**
(45) Veröffentlichungstag und Bekanntmachung des Hinweises auf die Patenterteilung: **22.07.1998**
(21) Anmeldenummer: 95912190.6
(22) Anmeldetag: 02.03.1995
(51) Int. Cl.: H02K 7/116

(54) **ELEKTROMOTOR**
ELECTRIC MOTOR
MOTEUR ELECTRIQUE

(30) Priorität: 08.03.1994 DE 4407714
(43) Veröffentlichungstag der Anmeldung: 27.12.1996
(73) Patentinhaber: GRÜNDL UND HOFFMANN GmbH GESELLSCHAFT FÜR ELEKTROTECHNISCHE ENTWICKLUNGEN, D-82319 Starnberg (DE)
(72) Erfinder: RASCH, Reinhard, D-82229 Hechendorf (DE); GRÜNDL, Andreas, D-81377 München (DE); HOFFMANN, Bernhard, D-82319 Starnberg (DE)
(74) Vertreter: Beyer, Andreas, Dr.
(86) Internationale Anmeldenummer: EP9500767
(87) Internationale Veröffentlichungsnummer: WO9524761

(56) Entgegenhaltungen:
- EP-A- 0 463 895
- DE-A- 3 444 420
- DE-U- 8 513 219
- GB-A- 2 250 142
- US-A- 2 514 460
- PATENT ABSTRACTS OF JAPAN vol. 017 no. 548 (M-1490) ,4.Oktober 1993 & JP,A,05 149401 (HONDA MOTOR CO LTD) 15.Juni 1993,
- PATENT ABSTRACTS OF JAPAN vol. 018 no. 102 (E-1511) ,18.Februar 1994 & JP,A,05 300692 (MITSUBISHI ELECTRIC CORP) 12.November 1993,

## Beschreibung

Die vorliegende Erfindung betrifft einen Elektromotor mit einem integrierten Getriebe.

Aus der DE-U-85 13 219 ist ein als Außenläufer ausgebildeter Elektromotor bekannt, in dessen Kernbereich ein Planetengetriebe mit einer Sonnenradwelle, einem Planetenradträger und einem Planetenhohlrad untergebracht ist, wobei das Planetenhohlrad das Planetengetriebe umschließt. Der außenlaufende Rotor ist an der Sonnenradwelle befestigt, die mit zwei Kugellagern im Stator gelagert ist. Der Stator wiederum ist über Verbindungsschrauben mit dem Hohlrad des Planetengetriebes verbunden, welches seinerseits durch Befestigungsschrauben an einem tragenden Gehäuseteil befestigt ist.

Aus der EP-A-0 463 895 ist ein Elektromotor mit einem innenlaufenden Rotor und innenliegendem Planetengetriebe bekannt, dessen Sonnenradwelle mittels eines Kugellagers im feststehenden Gehäuse des Elektromotors gelagert ist.

Der Erfindung liegt die Aufgabe zugrunde, einen Elektromotor mit integriertem Getriebe bereitzustellen, bei dem die Lagerung seiner bewegten Teile und sein Zusammenbau vereinfacht ist. Gleichzeitig soll eine möglichst kurze Baulänge des Elektromotors erzielt werden.

Diese Aufgabe ist erfindungsgemäß mit einem Elektromotor gelöst, der die im Anspruch 1 oder im Anspruch 2 angegebenen Merkmale aufweist. Erfindungsgemäß ist demnach der Rotor über die Sonnenradwelle mit einem rotorglockenseitigen Lager in dem Planetenhohlrad gelagert und das innenliegende Ende der Sonnenradwelle ist mittels eines weiteren Lagers gegenüber dem Planetenradträger drehbar abgestützt, der seinerseits mittels eines Lagers in dem Planetenhohlrad drehbar gelagert ist. Durch diese Art der Lagerung wird ein kompakter Aufbau und insbesondere eine kurze Baulänge sowie ein einfacher Zusammenbau des erfindungsgemäßen Elektromotors erzielt.

Das als Planetengetriebe ausgebildete Getriebe mit seiner Sonnenradwelle und seinem Planetenradträger hat ein Planetenhohlrad, das das Gehäuse des Getriebes bildet, so daß das Getriebe von den umgebenden Teilen des Elektromotors völlig abgekapselt ist. Außerdem kann das im Innern des Getriebes liegende Lager der Sonnenradwelle mit dem Lager des Planetenradträgers fluchtend angeordnet sein.

Erfindungsgemäß weist das Planetenhohlrad eine Befestigungsvorrichtung für eine den Stator haltende Tragplatte auf, was den Vorteil hat, daß keine separate Lagerung des Getriebes notwendig ist. Vielmehr erfolgt die Aufhängung des Motors und des Getriebes durch das gleiche Bauteil. Damit wird das Getriebemoment direkt in die Motoraufhängung geleitet.

Die Tragplatte für den Stator umgibt das Planetenhohlrad im Bereich dessen einer Stirnseite (der Abtriebsseite) ringförmig. In der axialen Verlängerung der ringförmigen Tragplatte befinden sich der Rotorkäfig und die Statorwicklungen.

Erfindungsgemäß kann das Planetenhohlrad mit einer Tragplatte für den Stator auch einstückig verbunden sein. Damit werden weitere (Befestigungs-) Bauteile und damit auch Montageschritte überflüssig. Außerdem wirkt diese einstückige Ausgestaltung der Tragplatte mit dem Planetenhohlrad als vergrößerte Kühlfläche für das Getriebe, das vorzugsweise gekapselt ist und in Getriebeöl läuft.

Bei einer anderen Ausführungsform ist die Tragplatte für den Stator in einer randseitig offenen Ausnehmung des Planetenhohlrades im Bereich dessen einer Stirnseite angeordnet und befestigt.

Bei einer bevorzugten Ausführungsform weist die Sonnenradwelle an ihrem aus dem Planetenhohlrad herausweisenden Endbereich eine Befestigungsvorrichtung für den Rotor auf.

So können auch hier separate Lagerungen des Rotors und der Sonnenradwelle entfallen.

Weil der Rotor über die Sonnenradwelle mit wenigstens einem Lager in dem Planetenhohlrad gelagert ist (vorzugsweise erfolgt die Lagerung durch mehrere Lager), ist eine zusätzliche Lagerung der Sonnenradwelle zusammen mit dem Rotor am Gehäuse des Elektromotors nicht notwendig. Damit entfallen auch zusätzliche Dichtungen, die bei einem kühlmittelgekühlten Elektromotor an dessen Gehäuse erforderlich wären.

Bei einer anderen besonders bevorzugten Ausführungsform ist die Sonnenradwelle an ihrem aus dem Planetenhohlrad herausweisenden Endbereich mit dem Rotor einstückig verbunden. Diese Bauform erlaubt einen Verzicht auf Verbindungselemente zwischen dem Planetenhohlrad und dem Rotor.

Bei allen Ausführungsformen weist der Planetenradträger eine nach innen versetzte Flanschstelle auf. Diese Ausgestaltung erlaubt eine besonders kurze Bauform und hat insbesondere bei Einsatz des Elektromotors als Traktionsantrieb den Vorteil, daß bei vorgegebenem Radabstand die anzuflanschende Gelenkwelle relativ lang gestaltet werden kann, wodurch sich der notwendige Längenausgleich in der Gelenkwelle und die notwendige Winkelbeweglichkeit reduziert.

Weitere Vorteile und Ausgestaltungen des erfindungsgemäßen Elektromotors werden in der nachstehenden Beschreibung anhand der Zeichnung erläutert, wobei
- Fig. 1: eine schematische Darstellung des Elektromotors mit dem Getriebe in teilweisem Längsschnitt, und
- Fig. 2: ein Getriebe des Elektromotors nach Fig. 1 mit daran angeordneter Rotorglocke in zwei Ausführungsformen zeigt.

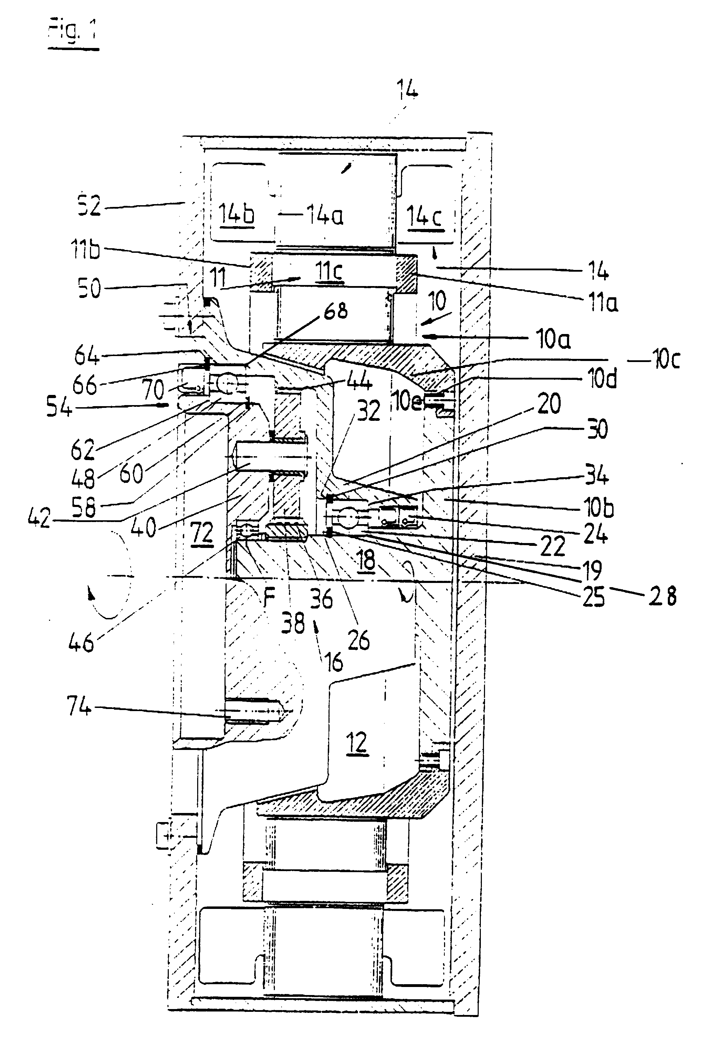

In Fig. 1 ist ein bürstenloser, als Innenläufer ausgebildeter Elektromotor gezeigt, der einen glockenförmigen Rotor 10 aufweist, der einen freien Innenraum 12 hat. Der Rotor ist durch die Rotorglocke 10a gebildet, die an ihrer äußeren Mantelfläche 10b ein Läuferblechpaket 11, das durch einen aus zwei axial beabstandeten Kurzschlußringen 11a, 11b und diese verbindende Kupferstäbe 11c gebildeten Käfig zusammengehalten ist. Zu dem Rotor 10 ist unter Bildung eines Ringspaltes in radialem Abstand ein Statorpaket 14 angeordnet. Das Statorpaket besteht aus einem Blechpaket 14a sowie Statorwicklungen, deren Wickelköpfe 14b, 14c an beiden Stirnseiten des Blechpaketes 14a überstehen.

Die veranschaulichte Rotorglocke 10a ist zweiteilig gestaltet, das heißt, sie besteht aus einer Stirnplatte 10b und einem Mantel 10c, der mit der Stirnplatte 10b drehfest durch eine in einem Gewindeloch 10d eingebrachte Schraube 10e verschraubt ist. Die Rotorglocke kann jedoch auch einteilig hergestellt sein.

In dem freien Innenraum 12 des Rotors 10 ist ein Teil eines als Planetengetriebes ausgebildeten (Untersetzungs-) Getriebes 16 angeordnet.

Das Getriebe 16 weist Sonnenradwelle 18 auf, die mit der Rotorglocke 10a koaxial und drehfest verbunden ist. Diese Verbindung kann entweder durch einen Wellenzapfen erfolgen, der ein Zahnprofil aufweist, auf das die Rotorglocke mit einer entsprechend geformten Öffnung aufgeschrumpft ist, oder die Rotorglokke ist auf dem Wellenzapfen festgeschraubt. Außerdem kann die Verbindung einstückig ausgeführt sein, das heißt, die Sonnenradwelle und die Rotorglocke werden als ein gemeinsames Drehteil hergestellt.

Es sind selbstverständlich auch andere Verbindungstechniken möglich. Entscheidend ist lediglich, daß die Rotorglocke 10a mit der Sonnenradwelle 18 möglichst kurz und ohne zusätzliche Bauteile verbunden wird.

Das Planetengetriebe weist außerdem ein Hohlrad 20 auf, das auch das Gehäuse des Getriebes 16 bildet. Die Sonnenradwelle 18 ist in dem Hohlrad 20 durch ein Kugellager 22 gelagert. Außerdem ist die zu der Rotorglocke 10a hinweisende Seite der Wellendurchführung mit einer Abdichtung 24 versehen.

Der innere Ring des Kugellagers 22 ist an der Sonnenradwelle 18 durch einen in einer Nut 25 eingesetzten Spannring 26 gegen eine Stufe 28 festgelegt. Der äußere Ring des Kugellagers 22 ist an dem Hohlrad 20 durch einen in einer Nut 30 eingesetzten Spannring 32 gegen die vordere Innenwand 34 des Hohlrades 20 festgelegt.

Das Sonnenrad 36 sitzt drehfest auf der Sonnenradwelle 18 und kämmt mit drei Planetenrädern 38, von denen nur eines veranschaulicht ist. Die Planetenräder 38 sind durch einen Planetenradträger 40 gehalten, mit dem sie jeweils durch einen Zapfen 42 verbunden sind. Außerdem kämmen die Planetenräder 38 mit einer Innenverzahnung 44 des Hohlrades 20.

Das innenliegende Ende der Sonnenradwelle 18 ist durch ein Lager 46 gegen den Planetenradträger 40 drehbar abgestützt, der seinerseits durch ein Lager 48 gegen das Hohlrad 20 drehbar gelagert ist. Die beiden Lager 46 und 48 sind dabei fluchtend zueinander ausgerichtet (siehe Fluchtlinie F).

Das Planetenhohlrad 20 hat eine Außenkontur, die abschnittsweise der Innenkontur der Rotorglocke 10a folgt. An seinem aus der Rotorglocke 10a herausragenden Ende weist das Planetenhohlrad 20 eine Befestigungsvorrichtung 50 in Gestalt eines Flansches für eine Tragplatte 52 für den Stator 14 auf. Die Tragplatte 52 für den Stator 14 hat eine ringförmige Gestalt und umgibt das Planetenhohlrad 20 im Bereich dessen von der Rotorglocke 10a wegweisenden Stirnseite 54.

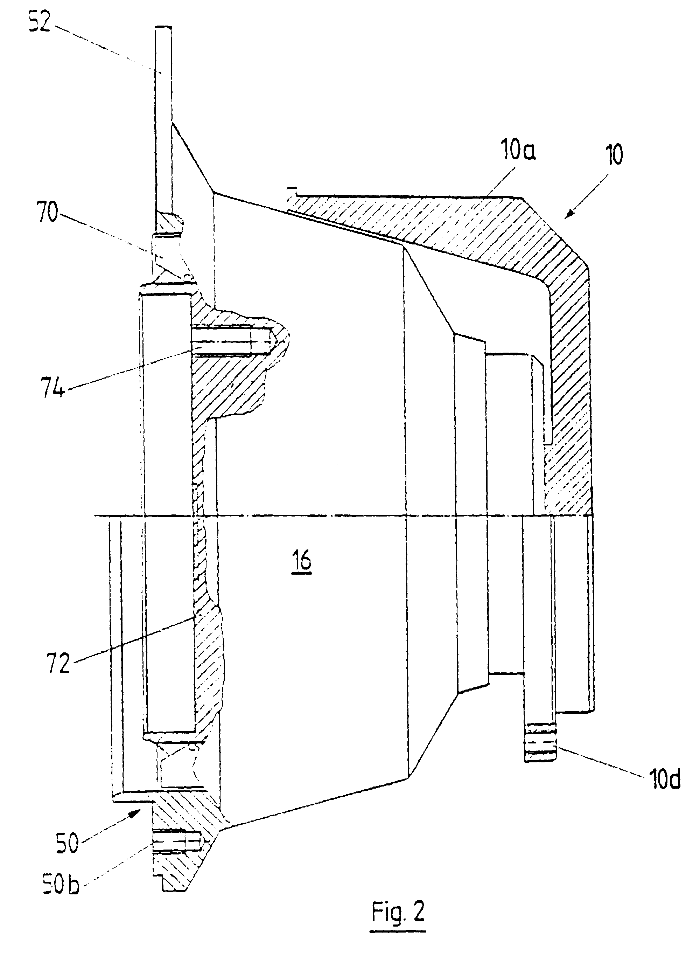

Die Befestigungsvorrichtung 50 ist durch eine randseitig offene Ausnehmung 50a des Planetenhohlrades 20 im Bereich dessen Stirnseite 54 sowie mehrere gleichmäßig entlang des Umfangs verteilte Gewindelöcher 50b gebildet, wodurch die Tragplatte 52 für den Stator 14 an dem Planetenhohlrad 20 starr befestigt ist. Diese Ausführungsform ist auch in Fig. 2 untere Hälfte veranschaulicht.

Bei einer anderen Ausführungsform (siehe Fig. 2, obere Hälfte) ist das Planetenhohlrad 20 mit der Tragplatte 52 für den Stator 14 einstückig verbunden.

Der innere Ring des Kugellagers 48 ist an dem Planetenradträger 40 durch einen in einer Nut 58 eingesetzten Spannring 60 gegen eine Stufe 62 an dem Planetenhohlrad 20 festgelegt. Der äußere Ring des Kugellagers 48 ist an dem Planetenhohlrad 20 durch einen in einer Nut 64 eingesetzten Spannring 66 gegen eine Stufe 68 in der Innenwand des Planetenhohlrades 20 festgelegt.

Auf der Außenseite des Spannrings 66 ist zwischen dem Planetenradträger 40 und dem Planetenhohlrad 20 eine Dichtung 70 vorgesehen.

Der Planetenradträger 40 weist eine nach innen versetzte Flanschstelle 72 in Gestalt einer zylindrischen Ausnehmung auf, die mehrere koaxiale Gewindelöcher 74 zur Verschraubung mit einer (nicht veranschaulichten) Gelenkwelle hat.

## Patentansprüche

1. Elektromotor, mit einem innenlaufenden Rotor (10) und einem in radialem Abstand dazu angeordneten Stator (14), wobei der Rotor (10) einen freien Innenraum (12) aufweist, in dem zumindest ein Teil eines als Planetengetriebe mit einer Sonnenradwelle (18), einem Planetenhohlrad (20) und einem Planetenradträger (40) ausgebildeten Getriebes (16) angeordnet ist, dessen Sonnenradwelle (18) an ihrem aus dem Planetenhohlrad (20) herausragenden Endbereich eine Befestigungsvorrichtung für den Rotor (10) aufweist, und dessen Planetenhohlrad (20) eine Befestigungsvorrichtung für eine Tragplatte (52) aufweist, die das Planetenhohlrad (20) im Bereich seiner einen Stirnseite (54) ringförmig umgibt und die den Stator (14) hält, wobei der Rotor (10) über die Sonnenradwelle (18) mit einem rotorglockenseitigen Lager (22) in dem Planetenhohlrad (20) gelagert ist, das innenliegende Ende der Sonnenradwelle (18) mittels eines Lagers (46) gegen den Planetenradträger (40) drehbar abgestützt ist und dieser mittels eines weiteren Lagers (48) in dem Planetenhohlrad (20) drehbar gelagert ist, und wobei der Planetenradträger (40) eine nach innen versetzte Abtriebsflanschstelle (72) aufweist.

2. Elektromotor, mit einem innenlaufenden Rotor (10) und einem in radialem Abstand dazu angeordneten Stator (14), wobei der Rotor (10) einen freien Innenraum (12) aufweist, in dem zumindest ein Teil eines als Planetengetriebe mit einer Sonnenradwelle (18), einem Planetenhohlrad (20) und einem Planetenradträger (40) ausgebildeten Getriebes (16) angeordnet ist, dessen Planetenhohlrad (20) eine Befestigungsvorrichtung für eine Tragplatte (52) aufweist, die das Planetenhohlrad (20) im Bereich seiner einen Stirnseite (54) ringförmig umgibt und die den Stator (14) hält, wobei der Rotor (10) über die einstückig mit ihm verbundene Sonnenradwelle (18) mit einem rotorglockenseitigen Lager (22) in dem planetenhohlrad (20) gelagert ist, das innenliegende Ende der Sonnenradwelle (18) mittels eines Lagers (46) gegen den Planetenradträger (40) drehbar abgestützt ist und dieser mittels eines weiteren Lagers (48) in dem Planetenhohlrad (20) drehbar gelagert ist, und wobei der Planetenradträger (40) eine nach innen versetzte Flanschstelle (72) aufweist.

## Claims

1. An electric motor, comprising an internal rotor (10) and a stator (14) which is arranged at a radial distance therefrom, with the rotor (10) having a free inner space (12) in which at least a portion of a gear unit (16) which is designed as a planetary gear unit and which includes a sun gear shaft (18), a ring gear (20) and a planet wheel carrier (40) is arranged, the sun gear shaft (18) of which comprises a fastening means for the rotor (10) at an end portion which protrudes from the ring gear (20), and the ring gear (20) of which comprises a fastening means for a supporting plate (52) which encompasses the ring gear (20) in an area of one of its end faces (54) in an annular manner and which holds the stator (14), said rotor (10) being supported in the ring gear (20) by means of a rotor bell-side bearing (22) via the sun gear shaft (18), an inner end of the sun gear shaft (18) rotatably bearing against the planet wheel carrier (40) by means of a bearing (46), and said planet wheel carrier (40) being rotatably supported in the ring gear (20) by means of a further bearing (48) and comprising an inwardly offset output flange location (72).

2. An electric motor, comprising an internal rotor (10) and a stator (14) which is arranged at a radial distance therefrom, with the rotor (10) having a free inner space (12) in which at least a portion of a gear unit (16) which is designed as a planetary gear unit and which includes a sun gear shaft (18), a ring gear (20) and a planet wheel carrier (40) is arranged, the ring gear (20) of which comprises a fastening means for a supporting plate (52) which encompasses the ring gear (20) in an area of one of its end faces (54) in an annular manner and which holds the stator (14), with the rotor (10) being supported via the sun gear shaft (18) which is integrally connected with the rotor (10) in the ring gear (20) by means of a rotor bell-side bearing (22), an inner end of the sun gear shaft (18) rotatably bearing against the planet wheel carrier (40) by means of a bearing (46), and said planet wheel carrier being rotatably supported in the ring gear (20) by means of a further bearing (48) and comprising an inwardly offset flange location (72).

## Revendications

1. Moteur électrique comprenant un rotor intérieur (10) et un stator (14) disposé radialement espacé de celui-ci, le rotor présentant un espace libre intérieur (12) dans lequel au moins une partie d'une transmission (16) formée d'un système d'engrenages planétaires comprenant un arbre de roue solaire (18), une roue à denture intérieure (20) et un porte-pignons satellites (40), dont l'arbre de roue solaire (18) présente à sa portion d'extrémité faisant saillie hors de la roue à denture intérieure (20) un dispositif de fixation pour le rotor (10), et dont la roue à denture intérieure (20) présente un dispositif de fixation pour une plaque de support (52) qui entoure annulairement la roue à denture intérieure (20) dans la zone de l'une de ses faces frontales (54) et qui tient le stator (14), dans lequel le rotor (10) est monté à rotation par l'intermédiaire de l'arbre de roue solaire (18) avec un palier (22) du côté en cloche du rotor dans la roue à denture intérieure (20), l'extrémité située à l'intérieur de l'arbre de roue solaire (18) est appuyée à rotation au moyen d'un palier (46) contre le porte-pignons satellites (40) et celui-ci est monté à rotation au moyen d'un autre palier (48) dans la roue à denture intérieure (20) et dans lequel le porte-pignons satellites (40) présente un emplacement de flasque de sortie (72) déporté vers l'intérieur.

2. Moteur électrique comprenant un rotor intérieur (10) et un stator (14) disposé radialement espacé de celui-ci, le rotor présentant un espace libre intérieur (12) dans lequel au moins une partie d'une transmission (16) formée d'un système d'engrenages planétaires comprenant un arbre de roue solaire (18), une roue à denture intérieure (20) et un porte-pignons satellites (40), dont la roue à denture intérieure (20) présente un dispositif de fixation pour une plaque de support (52) qui entoure annulairement la roue à denture intérieure (20) dans la zone de l'une de ses faces frontales (54) et qui tient le stator (14), dans lequel le rotor (10) est monté à rotation par l'intermédiaire de l'arbre de roue solaire (18) qui fait corps avec lui avec un palier (22) du côté en cloche du rotor dans la roue à denture intérieure (20), l'extrémité située à l'intérieur de l'arbre de roue solaire (18) est appuyée à rotation au moyen d'un palier (46) contre le porte-pignons satellites (40) et celui-ci est monté à rotation au moyen d'un autre palier (48) dans la roue à denture intérieure (20) et dans lequel le porte-pignons satellites (40) présente un emplacement de flasque (72) déporté vers l'intérieur.
